(19) Europäisches Patentamt
European Patent Office
Office européen des brevets

(11) EP 1 985 642 A1

(12) EUROPEAN PATENT APPLICATION

(43) Date of publication:
**29.10.2008 Bulletin 2008/44**

(21) Application number: **08007579.9**

(22) Date of filing: **18.04.2008**

(51) Int Cl.:
***C08G 18/18*** *(2006.01)* ***C08G 18/20*** *(2006.01)*
***C08G 18/32*** *(2006.01)* ***C08G 18/38*** *(2006.01)*
***C08G 18/40*** *(2006.01)* ***C08K 5/3445*** *(2006.01)*
*C08G 101/00* *(2006.01)*

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.04.2007 US 739750**

(71) Applicant: **Air Products and Chemicals, Inc.**
**Allentown, PA 18195-1501 (US)**

(72) Inventors:
- **Andrew, Gary Dale**
**Walnutport**
**PA 18088 (US)**
- **Dewhurst, John Elton**
**Bethlehem**
**PA 18018 (US)**
- **Listemann, Mark Leo**
**Kutztown**
**PA 19530 (US)**
- **Zarkov, Goran**
**Macungie**
**PA 18062 (US)**
- **Zhang, Yuedong**
**Shanghai 200127 (CN)**

(74) Representative: **Kador & Partner**
**Corneliusstrasse 15**
**80469 München (DE)**

(54) **Additives for improving surface cure and dimensional stability of polyurethane foams**

(57) A composition for making a polyurethane foam includes a fugitive tertiary amine urethane catalyst and amidoamine and/or imidazoline property enhancing additives. The inclusion of one or more of these property enhancing additives serves to reduce or eliminate physical property and surface deterioration of polyurethane foams made at reduced density.

EP 1 985 642 A1

## Description

FIELD OF THE INVENTION

The invention relates to polyurethane products and methods for producing them. More particularly, it relates to additives for improving surface cure and dimensional stability of polyurethane foams.

BACKGROUND OF THE INVENTION

Manufacturers of polyurethane articles require ever-improving processing technology to meet the escalating pressures of cost efficiency and complicated part design. Cost efficiency can be improved by the production of polyurethane foams having lower and lower densities. As densities are lowered physical properties such as tensile, tear, elongation, surface appearance and dimensional stability may deteriorate, preventing the lighter weight part from meeting performance requirements. Thus there is an increasing need for additives to enable density reduction without sacrificing physical properties.

BRIEF SUMMARY OF THE INVENTION

In one aspect, the invention provides a method of making a polyurethane foam. The method includes combining a polyol component, an organic isocyanate, a fugitive tertiary amine urethane catalyst, and a particular additive composition. In this aspect the additive composition comprises one or more compounds of the following formulas A and/or B:
an amidoamine of formula A:

$$(RCO)N(R')-[(CH_2)_m-NR']_n-R' \qquad A$$

and/or
an imidazoline of formula B:

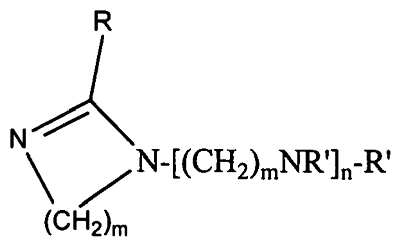

B

in which
R is hydrogen, a C1-C35 alkyl, substituted alkyl, alkenyl, substituted alkenyl, aryl, substituted aryl or alkylaryl group;
R' each is independently an RCO- acyl group, a hydrogen, a C1-C36 alkyl, substituted alkyl, alkenyl, substituted alkenyl, aryl, substituted aryl, alkylaryl group or, when n > 1 in formula B, a group the formula:

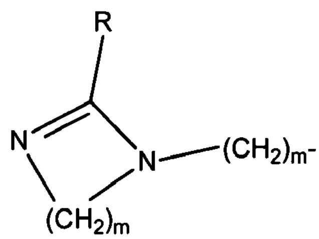

;

m is 2 or 3; and
n is an integer from 1 to 10.
In another aspect, the invention provides a composition including a fugitive tertiary amine urethane catalyst

and at least one additive according to formulas (A) and/or (B) as defined above. A polyol component may be included in the composition, which composition optionally may also include one or more blowing agents, crosslinkers, additional urethane catalysts, and surfactants.

In yet another aspect, the additive composition for use in the above inventive aspects comprises the reaction product of a C1-C36 carboxylic acid and a polyethylene polyamine or polypropylene polyamine.

As another embodiment, the invention provides compositions for making polyurethane foam comprising the contact product of a polyol component, an organic isocyanate, a fugitive tertiary amine urethane catalyst, and the property enhancing additive composition. In a further aspect the polyurethane foam compositions comprise flexible microcellular elastomers.

## DETAILED DESCRIPTION OF THE INVENTION

One aspect of the invention relates to property enhancing additive compositions for making polyurethane foams. The additive compositions include at least one compound, shown below as formulas A and B, or the compositions can be obtained by the reaction of a C1-C36 carboxylic acid with a polyethylene or polypropylene polyamine. The inclusion of one or more of these property enhancing additives serves to reduce or eliminate physical property and surface deterioration of polyurethane foams made at reduced density. The additive compounds may be used in conjunction with conventional fugitive tertiary amine catalyst compositions under otherwise conventional conditions to make polyurethane foams. The foams are made by combining at least one polyisocyanate compound, at least one polyol compound, and at least one fugitive tertiary amine urethane catalyst composition in the presence of the defined additive composition. A blowing agent is usually included, but need not be.

### Property Enhancing Additives

As used herein, the term "property enhancing additive" means a compound or mixture of compounds according to formula (A) and/or formula (B) below or the reaction product of a C1-C36 carboxylic acid with a polyethylene or polypropylene polyamine.

Suitable for use in the invention would be amidoamines of formula A:

$$(RCO)N(R')\text{-}[(CH_2)_m\text{-}NR']_n\text{-}R' \qquad A$$

in which

R is hydrogen, a C1-C35 alkyl, substituted alkyl, alkenyl, substituted alkenyl, aryl, substituted aryl or alkylaryl group; preferably a C14-C22 fatty alkyl or alkenyl group;

R' each independently is RCO-, a hydrogen atom, a C1-C36 alkyl, substituted alkyl, alkenyl, substituted alkenyl, aryl, substituted aryl or alkylaryl group; preferably hydrogen or a C1-C4 alkyl group;

m is 2 or 3; and

n is an integer from 1 to 10.

It is preferred that the property enhancing amidoamine compounds have the following formula A1:

$$(RCO)N(H)\text{-}[(CH_2)_m\text{-}NH]_n\text{-}R' \qquad A1$$

where

R is a C6-C17 alkyl, substituted alkyl, alkenyl, substituted alkenyl, aryl, substituted aryl or alkylaryl group; in particular C16-C17 fatty alkyl or alkenyl groups;

$R^1$ is a hydrogen atom or a RCO- acyl group; especially hydrogen;

m is 2 or 3; especially 2; and

n is an integer from 1 to 6; especially 2 to 5.

Another property enhancing compound suitable for use in the invention would be an imidazoline of formula B:

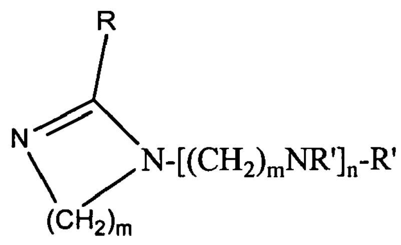

B

in which
R is a hydrogen, a C1-C35 alkyl, substituted alkyl, alkenyl, substituted alkenyl, aryl, substituted aryl or alkylaryl group; preferably a C14-C22 fatty alkyl or alkenyl group;
R' independently is an RCO- acyl group, hydrogen, a C1-C36 alkyl, substituted alkyl, alkenyl, substituted alkenyl, aryl, substituted aryl or alkylaryl group; preferably hydrogen or a C1-C4 alkyl group; or when n > 1 may be a group of the formula:

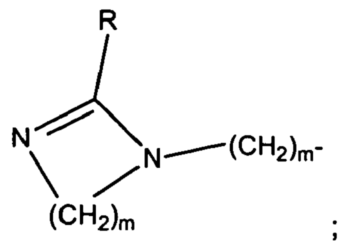

;

m is 2 or 3; and
n is an integer from 1 to 10.

Preferred property enhancing compounds are imidazolines of the following formula B1:

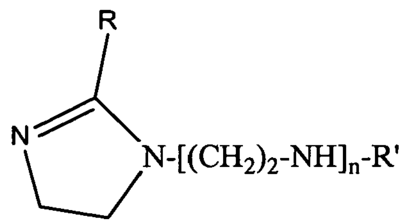

B1

where
R is hydrogen or a C6-C17 alkyl, substituted alkyl, alkenyl, substituted alkenyl, aryl, substituted aryl or alkylaryl group; in particular C16-C17 fatty alkyl and alkenyl groups;
R' is hydrogen, an RCO- acyl group or an imidazole group of the formula:

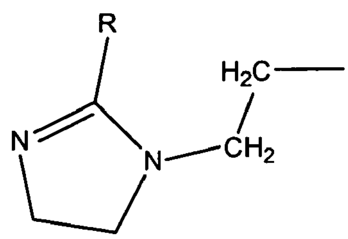

and

n is an integer from 1 to 6, in particular 2 to 5, and when n = 1 then R' represents hydrogen.

The property enhancing additives are prepared by reacting a carboxylic acid $RCO_2H$ and a polyamine $H_2N-[(CH_2)_m-NH_2]_n$ in the appropriate molar ratios at elevated temperatures of from 80°C to 300°C, preferably 100°C to 200°C, with water being driven off as is well known. The reaction may be performed using a solvent suitable for azeotropically removing water but is typically not necessary. The manufacture of amidoamines and imidazolines is well known in the epoxy curative art as evidenced by both patent literature and the open literature. The carboxylic acid : amine reactant molar ratio may range from about 2:1 to 0.8:1; typically 1.3:1 to 1:1, and preferably slightly greater than equimolar amounts of the reactants, for example about 1.05 to 1.1:1 acid : polyamine. U.S. 6,258,920 also teaches the preparation of suitable amidoamines.

Examples of carboxylic acids include, but are not limited to, formic acid, acetic acid, propionic acid, butanoic acid, pentanoic acid, hexanoic acid, heptanoic acid, octanoic acid, nonanoic acid, decanoic acid, undecanoic acid, dodecanoic acid, tetradecanoic acid, hexadecanoic acid, octadecanoic acid, coconut oil fatty acids, ricinoleic acid, tall oil fatty acids, oleic acid, caproic acid, caprylic acid, capric acid, lauric acid, myristic acid, palmitic acid, stearic acid, oleic acid, linoleic acid, linolenic acid, and their aliphatic or aromatic substituted derivatives such as 9- and 10- phenylstearic and related structures.

Advantageously fatty acids are used in the present invention and include those composed primarily of C14 to C22 monocarboxylic acids containing from 0 to 4 units of unsaturation. Preferred fatty acids are tall oil fatty acid (TOFA), soya fatty acid and coconut oil fatty acid.

In another aspect and for purposes of this invention, "fatty acids" are meant to include "dimer acids". Dimer acids are typically made by the thermal condensation of C18 fatty acids. Thus, dimer acids may replace some or all of the fatty monocarboxylic acids in the reaction with polyethylene or polypropylene polyamines to make the property enhancing additive compositions used in this invention. In such case, the use of dimer acids affords polyamides as is well known in the epoxy curative art.

Suitable monocarboxylic acids for making the property enhancing additives also include aromatic monocarboxylic acids such as benzoic acid, salicylic acid and naphthoic acid with benzoic acid being preferred. Aromatic dicarboxylic acids such as isophthalic acid and terephthalic acid may be blended with the monocarboxylic acid in a minor amount. The aromatic carboxylic acids may be blended with the alkyl and alkenyl carboxylic acids.

Examples of suitable polyamines include, but are not limited to, ethylenediamine (EDA), diethylenetriamine (DETA), triethylenetetramine (TETA), tetraethylenepentamine (TEPA), and pentaethylenehexamine (PEHA), hexaethyleneheptamine, dipropylenetriamine, tripropylenetetramine, tetrapropylenepentamine, pentapropylenehexamine, hexapropyleneheptamine and the like. DETA, TETA and TEPA are especially desired.

Unless otherwise specified, alkyl and alkenyl groups described herein are intended to include all structural isomers, linear or branched, of a given structure; for example, all enantiomers and all diasteriomers are included within this definition. As an example, unless otherwise specified, the term propyl is meant to include *n*-propyl and *iso*-propyl, while the term butyl is meant to include *n*-butyl, *iso*-butyl, t-butyl, sec-butyl, and so forth. Similarly, substituted alkyl, alkenyl, aryl, and alkylaryl groups described herein are intended to include substituted analogs of a given structure. For example, the substituents on alkyl, alkenyl, aryl, and alkylaryl groups can include, but are not limited to, halides; hydroxyl groups; amino groups; alkoxy, alkylamino, or dialkylamino groups having up to 10 carbon atoms; or combinations thereof.

Non-limiting examples of alkyl groups which can be present in the monocarboxylic acid include methyl, ethyl, propyl, butyl, pentyl, hexyl, heptyl, octyl, nonyl, or decyl, and the like. Examples of alkenyl groups within the scope of the present invention include, but are not limited to, ethenyl, propenyl, butenyl, pentenyl, hexenyl, heptenyl, octenyl, nonenyl, decenyl, and the like. Aryl and alkylaryl (alkylaryl is defined as an aryl-substituted alkyl or arylalkyl) groups include phenyl, alkyl-substituted phenyl, naphthyl, alkyl-substituted naphthyl, and the like. For example, non-limiting examples of aryl and alkylaryl groups useful in the present invention include, but are not limited to, phenyl, tolyl, benzyl, dimethylphenyl, trimethylphenyl, phenylethyl, phenylpropyl, phenylbutyl, propyl-2-phenylethyl, and the like.

Catalysts

The catalyst in the compositions of the present invention comprises a fugitive tertiary urethane catalyst and optionally a non-fugitive tertiary amine urethane catalyst. As used herein, the term "fugitive tertiary amine" catalyst means a tertiary amine that has a low boiling point (below about 120°C at atmospheric pressure) and does not comprise an isocyanate reactive group. "Non-fugitive tertiary amine" thus means a tertiary amine that also comprises an isocyanate-reactive group such as a primary amine, secondary amine, hydroxyl group, amide or urea, or a tertiary amine that has a high boiling point (typically above 120°C).

In one aspect of the invention pertaining to making polyurethane foams, especially microcellular elastomers for shoe soles, any fugitive gelling and/or blowing catalyst known in the art may be used in combination with the property enhancing additive. A gelling catalyst is any tertiary amine catalyst known in the urethane art with an initial selectivity of

less than 0.7. A blowing catalyst is any tertiary amine catalyst known in the urethane art with an initial selectivity of greater than 0.7. Catalyst selectivity is defined as the ratio of the rate of blowing (urea formation) to the rate of gelling (urethane formation) [J. Cellular Plastics, Vol. 28, 1992, pp.360-398].

The catalyst composition used in combination with the property enhancing component comprises one or more tertiary amine urethane catalysts that are volatile and not isocyanate-reactive. Suitable volatile gelling catalysts may include, for example, triethylenediamine (TEDA), quinuclidine, pentamethyldipropylenetriamine, dimethylcyclohexyl amine, tris(dimethylaminopropyl)amine, substituted imidazoles such as 1,2-dimethylimidazole and 1,8-diazabicyclo [5.4.0]undec-7-ene (DBU).

Suitable volatile blowing catalysts include but are not restricted to bis(dimethylaminoethyl) ether, pentamethyldiethylenetriamine and related compositions (U.S. 5,039,713, U.S. 5,559,161), higher permethylated polyamines such as permethylated triethylenetetramine (U.S. 4,143,003), and branched polyamines (U.S. 3,836,488).

The catalyst composition may also comprise, in addition to the fugitive tertiary amine urethane catalyst, non-fugitive tertiary amine urethane catalysts that are not volatile and are isocyanate reactive. Such non-fugitive tertiary amine catalysts include both gelling and blowing catalysts. Exemplary non-fugitive gelling catalysts include N,N-bis(3-dimethylaminopropyl) N-isopropanol-amine; N,N-dimethylaminoethyl-N'-methyl ethanolamine; N,N,N'-trimethylaminopropyl ethanolamine; N,N-dimethylethanolamine; N,N-dimethyl-N',N'-2-hydroxy(propyl)-1,3-propyfenediamine; dimethylaminopropylamine; N,N,N",N"-tetramethyldipropylenetriamine; N,N-bis(3-dimethylaminopropyl)-1,3-propanediamine; N-dimethylaminopropyl-N-methylethanolamine; substituted quinuclidines (U.S. 5,143,944 and U.S. 5,233,039); substituted pyrrolizidines (U.S. 5,512,603); substituted pyrrolidines (EP 499 873); (N,N-dimethylaminoethoxy)ethanol; methylhydroxyethylpiperazine; bis(N,N-dimethyl-3-aminopropyl)amine; urea compounds of tertiary amines such as N,N-dimethylaminopropyl urea and N,N'-bis(3-dimethylaminopropyl)urea; bis(dimethylamino)-2-propanol; N-(3-aminopropyl) imidazole; N-(2-hydroxypropyl)-imidazole; and N-(2-hydroxyethyl) imidazole.

Exemplary non-fugitive blowing catalysts include but are not restricted to 2-[N-(dimethylaminoethoxyethyl)-N-methylamino]ethanol and related structures (U.S. 4,338,408), alkoxylated polyamines (U.S. 5,508,314), imidazole-boron compositions (U.S. 5,539,007), and aminopropyl-bis(aminoethyl)ether compositions (U.S. 5,874,483 and U.S. 5,824,711); dimethylaminoethoxyethanol; N,N,N'-trimethyl-N'-3-amino-propyl-bis(aminoethyl) ether; and N,N,N'-trimethyl-N'-aminopropyl-bis(aminoethyl) ether.

Trimerization catalysts may be use in combination with the invention and include any such catalysts known in the art. Specific examples include N-hydroxyalkyl quaternary ammonium carbonylate or carboxylate salts, such as are disclosed in U.S. 4,582,861. Also useful are alkali metal carboxylate salts, examples of which are alkali salts of carboxylic acids for use in "blocking" (i.e. forming a salt with) amine-containing catalysts. One exemplary carboxylate salt is potassium 2-ethylhexanoate.

Some or all of the gelling, blowing, and trimerization catalyst may be "blocked" with (i.e. a salt formed with) a carboxylic acid salt, a phenol, or a substituted phenol, assuming that the catalyst contains amine functionality with which to form a salt to provide for a delayed onset of catalyst activity.

The catalyst compositions may also include other components, for example metal catalysts such as organotin compounds like dibutyltin dilaurate, for example when the desired polyurethane foam is a flexible slab stock.

<u>Polyisocyanate</u>

Polyurethanes prepared using the property enhancing additives of this invention made be made from any of a wide variety of polyisocyanates known in the art. Examples of suitable polyisocyanates include hexamethylene diisocyanate (HDI), phenylene diisocyanate (PDI), toluene diisocyanate (TDI), and 4,4'-diphenylmethane diisocyanate (MDI). Especially suitable are the 2,4-TDI and 2,6-TDI individually or together as their commercially available mixtures. Other suitable mixtures of diisocyanates are those known commercially as "crude MDI", also known as PAPI, which contain about 60% of 4,4'-diphenylmethane diisocyanate along with other isomeric and analogous higher polyisocyanates. One example is marketed by Dow Chemical Company under the name PAPI, and contains about 60% of 4,4'-diphenylmethane diisocyanate along with other isomeric and analogous higher polyisocyanates.

Also suitable are "prepolymers" of these isocyanate compounds, comprising a partially pre-reacted mixture of a polyisocyanate and a polyether or polyester polyol to convert one or more hydroxyls on the polyester polyol to substituted carbamate groups. Suitable prepolymers derived from polyether and polyester polyols are well known in the art.

<u>Polyol</u>

Polyurethanes prepared using the property enhancing additives of this invention made be made from any of a wide variety of polyols known in the art. Suitable polyols for use in making polyurethane formulations catalyzed by the catalyst compositions of the invention are the polyalkylene ether polyols and polyester polyols. The polyalkylene ether polyols include poly(alkylene oxide) polymers such as poly(ethylene oxide) and poly(propylene oxide) polymers and

copolymers having terminal hydroxyl groups derived from polyhydric compounds including diols and triols, such as for example ethylene glycol, propylene glycol, 1,3-butanediol, 1,4-butanediol, 1,6-hexanediol, neopentyl glycol, diethylene glycol, dipropylene glycol, pentaerythritol, glycerol, diglycerol, trimethylol propane, cyclohexanediol and like low molecular weight polyols. Useful polyester polyols include those produced by reacting a dicarboxylic acid with an excess of a diol, for example adipic acid with ethylene glycol, diethylene glycol or 1,4-butanediol, or reacting a lactone such as caprolactone with an excess of a diol such as propylene glycol. Other polyols are known in the art, and their use is also contemplated according to the invention.

Amine polyether polyols can be used in the present invention. These can be prepared when an amine such as, for example, ethylenediamine, diethylenetriamine, tolylenediamine, diphenylmethanediamine, or triethanolamine is reacted with ethylene oxide or propylene oxide.

In another aspect of the present invention, a single high molecular weight polyether polyol, or a mixture of high molecular weight polyether polyols, such as mixtures of different multifunctional materials and/or different molecular weight or different chemical composition materials can be used.

In yet another aspect of the present invention, polyester polyols can be used, including those produced when a dicarboxylic acid is reacted with an excess of a diol. Non-limiting examples include adipic acid or phthalic acid or phthalic anhydride reacting with ethylene glycol or butanediol. Polyols useful in the present invention can be produced by reacting a lactone with an excess of a diol, for example, caprolactone reacted with propylene glycol. In a further aspect, active hydrogen-containing compounds such as polyester polyols and polyether polyols, and combinations thereof, are useful in the present invention.

In addition to the base polyols described above, or instead of them, materials commonly referred to as "copolymer polyols" may be included in a polyol component for use according to the invention. Copolymer polyols may be used in polyurethane foams to increase the resistance of the foam to deformation, for example to improve the load-bearing properties of the foam. Depending upon the load-bearing requirements for the polyurethane foam, copolymer polyols may comprise from 0 to about 80 percent by weight of the total polyol content. Examples of copolymer polyols include, but are not limited to, graft polyols and polyurea modified polyols, both of which are known in the art and are commercially available.

<u>Blowing Agents</u>

Polyurethane foam production may be aided by the inclusion of a blowing agent to produce voids in the polyurethane matrix during polymerization. Any blowing agent known in the art may be used. Suitable blowing agents include compounds with low boiling points which are vaporized during the exothermic polymerization reaction. Such blowing agents are generally inert and therefore do not decompose or react during the polymerization reaction. Examples of inert blowing agents include, but are not limited to, carbon dioxide, chlorofluorocarbons, hydrogenated fluorocarbons, hydrogenated chlorofluorocarbons, acetone, and low-boiling hydrocarbons such as cyclopentane, isopentane, n-pentane, and their mixtures. Other suitable blowing agents include compounds, for example water, that react with isocyanate compounds to produce a gas.

<u>Other Optional Components</u>

A variety of other ingredients may be included in the formulations for making foams according to the invention. Examples of optional components include, but are not limited to, cell stabilizers such as silicones, other crosslinking agents, chain extenders, pigments, fillers, flame retardants, auxiliary urethane gelling catalysts, auxiliary urethane blowing catalysts, organometallic catalysts such as dibutyltin dilaurate, transition metal catalysts, and combinations of any of these. Suitable chain extenders for use according to the invention include ethylene glycol, 1,4-butanediol, and combinations of these.

The property enhancing composition can improve surface cure and dimensional stability in microcellular elastomers as well as conventional and high resilience slabstock foams and flexible molded polyurethane foam. The invention can be used to produce microcellular elastomers and other flexible polyurethane foams with superior properties at reduced densities.

The amount of property enhancing additive in the polyurethane foam composition should typically be about 0.1 to 5 parts per hundred parts polyol on a weight basis (pphp). More typically, the amount will be 0.2 to 3 pphp, and most typically 0.4 to 2 pphp.

In the following examples and tables use levels of the components other than the polyols are in pphp of such polyols unless indicated otherwise. General exemplary polyurethane formulations containing property enhancing additives according to the invention may include formulations such as set forth in any of Tables 1-4.

**Table 1. Polyether Polyol-Based Microcellular Polyurethane Formulation**

| Component | Parts by Wt (pphp) |
|---|---|
| Polyether polyol | 100 |
| Chain Extender (e.g., 1,4-butanediol or ethylene glycol) | 2-15 |
| Water | 0-0.4 |
| Cell stabilizer (e.g., silicone surfactant) | 0-0.5 |
| Water or organic blowing agent | 0.1-2.5 |
| Organometallic catalyst (e.g., dibutyltin dilaurate) | 0-0.3 |
| Tertiary amine catalyst (e.g., triethylenediamine) | 0.1-0.8 |
| Property enhancing additive | 0.1-3 |
| Isocyanate prepolymer*, free NCO % | 96-105 Index, 17-22% NCO |
| * MDI or TDI or both | |

**Table 2. Polyester Polyol-Based Microcellular Polyurethane Formulation**

| Component | Parts by Wt (pphp) |
|---|---|
| Polyester polyol | 100 |
| Chain Extender (e.g., 1,4-butanediol or ethylene glycol) | 4-15 |
| Water | 0-1.5 |
| Cell stabilizer (e.g., silicone surfactant) | 0-1.5 |
| Tertiary amine catalyst (e.g., triethylenediamine) | 0.1-0.8 |
| Property enhancing additive | 0.1-3 |
| Isocyanate prepolymer*, free NCO % | 96-104 Index, 16-23% NCO |
| * MDI or TDI or both | |

**Table 3. Flexible Foam Formulation**

| Component | Parts by Wt (pphp) |
|---|---|
| Conventional Polyether Polyol (e.g., -5000 MW Triol) | 20-100 |
| Co-Polymer Polyol (e.g., styrene-acrylonitrile polyol) | 0-80 |
| Silicone Surfactant | 1-2.5 |
| Blowing Agent | 2-4.5 |
| Crosslinker (e.g., diethanolamine) | 0.5-3 |
| Catalyst | 0.1-5 |
| Property enhancing additive | 0.1-5 |
| Isocyanate | 70-115 Index |

**Table 4. Rigid Foam Formulation**

| Component | Parts by Wt (pphp) |
|---|---|
| Polyol | 100 |

(continued)

| Component | Parts by Wt (pphp) |
|---|---|
| Silicone Surfactant | 1-4 |
| Blowing Agent | 2-35 |
| Water | 0-5 |
| Catalyst | 0.1-5 |
| Property enhancing additive | 0.1-5 |
| Isocyanate | 70-300 Index |

Preparation of Foams

Foams may be made according to the methods known in the art using typical polyurethane formulations to which have been added one or more property enhancing additives according to the invention. For example, flexible microcellular polyurethane elastomers with the excellent physical property characteristics at reduced density (Table 6) will typically comprise the components shown below in Table 5, in the amounts indicated. The components shown in Table 5 will be discussed in detail below.

**Table 5. Standard Test System**

| Component | pphp |
|---|---|
| Polyester polyol 2000 MW (adipic acid/EG/DEG) | 100 |
| Ethylene glycol (varied) | 9.8-15 |
| Water (total) | 0.70 |
| Silicone surfactant (DC 193) | 0.50 |
| Tertiary amine catalyst (triethylenediamine) | 0.67 |
| Property enhancing additive (Amidoamine) | 0-5.0 |
| MDI prepolymer (18.22% NCO) | 98-100 Index |

The amount of polyisocyanate used in polyurethane formulations according to the invention is not limited, but it will typically be within those ranges known to those of skill in the art. An exemplary range is given in Table 5, indicated by reference to "NCO Index" (isocyanate index). As is known in the art, the NCO index is defined as the number of equivalents of isocyanate, divided by the total number of equivalents of active hydrogen, multiplied by 100. The NCO index is represented by the following formula.

$$\text{NCO index} = [\text{NCO}/(\text{OH}+\text{NH})]\text{X}100$$

Flexible microcellular elastomers typically are made using polyester polyols of about 1000-3000 weight average molecular weight (Mw) and hydroxyl number (OH#) of about 28-35. If polyether polyols are used in the flexible microcellular elastomer compositions, such polyols would have a Mw of 2000 to 6000 and a OH# of 28 to 56.

In some embodiments of the invention, the catalyst and the property enhancing additive may be combined into a package, optionally with one or more polyols, including for example polyether polyols and polyester polyols, and optionally with one or more blowing agents and/or other additives commonly used in polyurethane formation. Examples of these other optional components have been listed previously, and they do not affect the basic nature of the invention. Such mixtures may subsequently be combined with an organic isocyanate to form a polyurethane foam, again optionally in the presence of other additives known in the art.

In addition to making flexible microcellular elastomers, the invention may also be used to prepare flexible foams and semi-flexible foams, such as are commonly utilized for many applications in the automotive industry (e.g., instrument panels and interior trims) as well as rigid foams.

Although specific exemplary types of polyurethane foams are discussed above and elsewhere herein, it is to

be understood that polyurethane foams of any type may be prepared according to the invention.

## EXAMPLES

In the following examples property enhancing additive compositions were tested using a low-pressure shear machine, manufactured by The Edge Sweets Company, Inc. of Grand Rapids, MI, with a screw speed of 6,000 RPM. Premix and prepolymer temperatures were maintained at 43°C. Each initiation time was recorded as the "cream time," i.e. the time at which a lightening of the color of the formulation and an increase in volume indicated the onset of foam formation. A mold with the dimensions of 30 x 15 x 1 cm was heated to 55°C. Each demold time was determined by demolding the part at the desired time and bending 180 degrees. When no cracking was observed the part was considered to have reached optimum demold. The densities of control parts were maintained at 0.45 grams per cubic centimeter (g/cc) throughout the study - see Table 6. Shore A hardness was measured by Shore A durometer. Surface dimensional stability was determined by visual inspection. The formulation in Table 5 was used for this study. The indicated polyester polyol was difunctional.

Following is a glossary of materials used in the Examples.

| Abbreviation | Compound |
|---|---|
| TEDA | Triethylenediamine |
| Amidoamine 1 (AA1) | Reaction product of tall oil fatty acids (TOFA) with tetraethylenepentamine (TEPA) comprising amidoamine and imidazoline at -50:50 wt. |

TABLE 6

| Example | Ethylene Glycol | AA1 | Cream time (sec) | Demold Time (min) | Density (g/cc) | Hardness (Shore A) | Surface Dimensional Stability |
|---|---|---|---|---|---|---|---|
| Control 1 | 9.8 | 0 | 5.0 | 4.0 | 0.45 | 51 | Good |
| Counter 1 | 9.8 | 0 | 5.0 | 4.0 | 0.35 | 38 | Poor |
| 2A | 9.8 | 1.0 | 5.0 | 3.0 | 0.35 | 41 | Good |
| 2B | 9.8 | 2.0 | 5.0 | 4.0 | 0.35 | 43 | Excellent |
| 2C | 9.8 | 2.0 | 5.0 | 4.0 | 0.25 | 39 | Excellent |
| Control 3 | 15.0 | 0 | 5.0 | 4.0 | 0.45 | 55 | Excellent |
| Counter 3 | 15.0 | 0 | 5.0 | 4.5 | 0.35 | 49 | Fair |
| 4A | 15.0 | 1.0 | 5.0 | 3.0 | 0.35 | 52 | Excellent |
| 4B | 15.0 | 2.0 | 5.0 | 4.0 | 0.35 | 57 | Excellent |

Example Control 1 showed the expected good surface dimensional stability at the 0.45 g/cc density typical for this formulation, while Example Counter 1 not according to the invention demonstrated the deterioration in stability when the part was produced at the lower density of 0.35 g/cc. Examples 2A-2C according to the invention demonstrated the improvements in surface dimensional stability at densities as low as 0.25 g/cc when the AA1 property enhancing additive was present.

Example Control 3 showed the expected good surface dimensional stability at the 0.45 g/cc density for a composition containing a higher level of ethylene glycol (EG) when compared to Example Control 1, while Example Counter 3 not of this invention demonstrated the deterioration in stability when the microcellular elastomer foam was produced at the lower density of 0.35 g/cc. Examples 4A and 4B according to the invention demonstrated the improvements in surface dimensional stability at a density of 0.35 g/cc when the AA1 property enhancing additive was present.

In the following clauses, preferred embodiments of the invention are described:

1. A composition consisting essentially of a fugitive tertiary amine urethane catalyst and an additive comprising one or more compounds of the following formulas A and/or B:

an amidoamine of formula A:

$$(RCO)N(R')-[(CH_2)_m-NR']_n-R' \qquad A$$

and
an imidazoline of formula B:

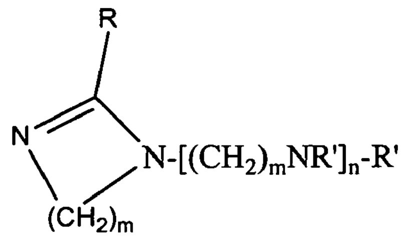

B

where
R is hydrogen, a C1-C35 alkyl, substituted alkyl, alkenyl, substituted alkenyl, aryl, substituted aryl or alkylaryl group;
R' each is independently an RCO- acyl group, a hydrogen, a C1-C36 alkyl, substituted alkyl, alkenyl, substituted alkenyl, aryl, substituted aryl or alkylaryl group; or when n > 1 in formula B a group the formula:

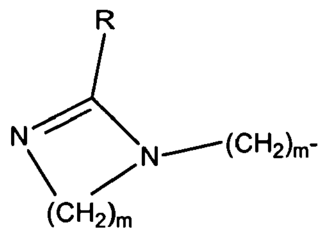

;

m is 2 or 3; and
n is an integer from 1 to 10.

2. The composition of clause 1 wherein the amidoamine and/or the imidazoline are the reaction product of a C1-C36 carboxylic acid and a polyethylene or polypropylene polyamine.

3. The composition of clause 2 further comprising a polyester or polyether polyol.

4. The composition of clause 1 wherein the catalyst is selected from the group consisting of fugitive gelling catalysts triethylenediamine, quinuclidine, pentamethyldipropylenetriamine, dimethylcyclohexylamine, tris(dimethylaminopropyl) amine, substituted imidazoles such as 1,2-dimethylimidazole, 1,8-diazabicyclo[5.4.0]undec-7-ene (DBU) and mixtures thereof.

5. The composition of clause 2 wherein the catalyst is selected from the group consisting of fugitive gelling catalysts triethylenediamine, quinuclidine, pentamethyldipropylenetriamine, dimethylcyclohexylamine, tris(dimethylaminopropyl) amine, substituted imidazoles such as 1,2-dimethylimidazole, 1,8-diazabicyclo[5.4.0]undec-7-ene (DBU) and mixtures thereof.

6. The composition of clause 2 wherein the catalyst is selected from the group consisting of fugitive blowing catalysts bis(dimethylaminoethyl) ether, pentamethyldiethylenetriamine and related compositions, higher permethylated polyamines such as permethylated triethylenetetramine, branched polyamines and mixtures thereof.

7. The composition of clause 1 wherein R is a C6-C17 alkyl or alkenyl group.

8. The composition of clause 3 wherein the carboxylic acid comprises coconut oil fatty acid, soya fatty acid, tall oil fatty acid or dimer acid.

9. The composition of clause 8 wherein the polyamine is diethylenetriamine (DETA), triethylenetetramine (TETA), tetraethylenepentamine (TEPA), or pentaethylenehexamine (PEHA).

10. The composition of clause 3 wherein the additive comprises the reaction product of tall oil fatty acids and tetraethylenepentamine (TEPA).

11. The composition of clause 3 wherein the additive comprises the reaction product of tall oil fatty acids and triethylenetetramine (TETA).

12. The composition of clause 1 comprising one or more blowing agents.

13. A composition comprising a fugitive tertiary amine urethane catalyst, a polyol component consisting of one or more polyols, and an additive comprising one or more compounds of the following formulas A1 and/or B1:
an amidoamine of formula A1:

$$(RCO)N(H)\text{-}[(CH_2)_m\text{-}NH]_n\text{-}R' \qquad A1$$

and
an imidazoline of formula B1:

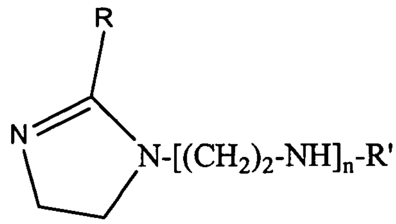

B1

in which
R is a C6-C17 alkyl, substituted alkyl, alkenyl, substituted alkenyl, aryl, substituted aryl or alkylaryl group;
R' is a hydrogen atom, a RCO- acyl group or an imidazole group of the formula:

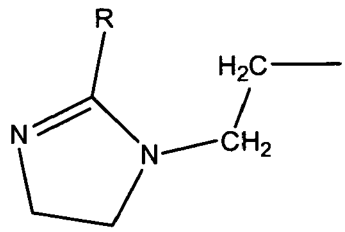

m is 2 or 3; and
n is an integer from 1 to 6 and when n = 1 then R' is hydrogen.

14. The composition of clause 13 wherein the fugitive tertiary amine urethane catalyst comprises one or more of triethylenediamine, quinuclidine, pentamethyldipropylenetriamine, dimethylcyclohexylamine, tris(dimethylaminopropyl) amine, substituted imidazoles such as 1,2-dimethylimidazole, 1,8-diazabicyclo[5.4.0]undec-7-ene (DBU) and mixtures thereof.

15. The composition of clause 13 wherein the amidoamine and/or the imidazoline are the reaction product of a C14-C22 carboxylic acid and a polyethylene or polypropylene polyamine.

16. The composition of clause 15 wherein the carboxylic acid comprises soya fatty acid, coconut oil fatty acid, tall oil fatty acid or dimer acid.

17. The composition of clause 16 wherein the polyamine is diethylenetriamine (DETA), triethylenetetramine (TETA), tetraethylenepentamine (TEPA), or pentaethylenehexamine (PEHA).

18. The composition of clause 13 wherein the additive comprises the reaction product of tall oil fatty acid and tetraethylenepentamine (TEPA).

19. The composition of clause 13 wherein the additive comprises the reaction product of tall oil fatty acid and triethylenetetramine (TETA).

20. The composition of clause 13 further comprising one or more blowing agents.

21. A method of making a polyurethane foam, the method comprising combining a polyol component, an organic isocyanate, a fugitive tertiary amine urethane catalyst, and an additive comprising one or more compounds of the following formulas A and/or B:
an amidoamine of formula A:

$$(RCO)N(R')\text{-}[(CH_2)_m\text{-}NR']_n\text{-}R' \qquad A$$

and
an imidazoline of formula B:

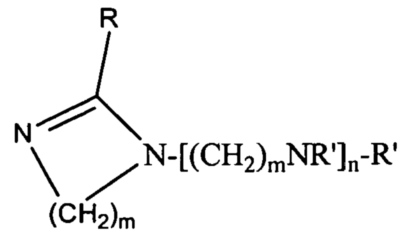

B

where
R is hydrogen, a C1-C35 alkyl, substituted alkyl, alkenyl, substituted alkenyl, aryl, substituted aryl or alkylaryl group;
R' each is independently an RCO- acyl group, a hydrogen, a C1-C36 alkyl, substituted alkyl, alkenyl, substituted alkenyl, aryl, substituted aryl or alkylaryl group; or when n > 1 in formula B a group the formula:

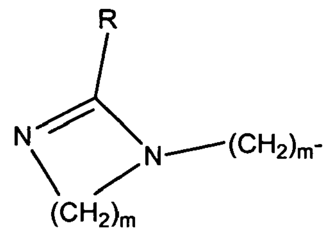

;

m is 2 or 3; and
n is an integer from 1 to 10.
22. The method of clause 21 wherein the amidoamine and/or the imidazoline are the reaction product of a C14-C22 monocarboxylic acid and a polyethylene or polypropylene polyamine.
23. The method of clause 22 wherein the carboxylic acid comprises soya fatty acid, coconut oil fatty acid, tall oil fatty acid or dimer acid.
24. The method of clause 22 wherein the polyamine is diethylenetriamine (DETA), triethylenetetramine (TETA), tetraethylenepentamine (TEPA), or pentaethylenehexamine (PEHA).
25. A composition consisting essentially of a fugitive tertiary amine urethane catalyst and an additive comprising the reaction product of a C1-C36 carboxylic acid and a polyethylene or polypropylene polyamine.
26. The composition of clause 25 further comprising a polyester or polyether polyol.
27. A method of making a polyurethane foam, the method comprising combining a polyol component, an organic isocyanate, a fugitive tertiary amine urethane catalyst, and a property enhancing additive comprising the reaction product of a C14-C22 carboxylic acid and a polyethylene or polypropylene polyamine.
28. The method of Clause 27 for making a polyether polyol-based microcellular elastomer foam which comprises combining the following components

| **Component** | **Parts by Wt (pphp)** |
|---|---|
| Polyether polyol | 100 |
| Chain Extender | 2-15 |
| Water | 0-0.4 |
| Cell stabilizer | 0-0.5 |
| Water or organic blowing agent | 0.1-2.5 |
| Organometallic catalyst | 0-0.3 |

(continued)

| Component | Parts by Wt (pphp) |
|---|---|
| Tertiary amine catalyst | 0.1-0.8 |
| Property enhancing additive | 0.1-3 |
| Isocyanate prepolymer, free NCO % | 96-105 Index, 17-22% NCO |

29. The method of Clause 27 for making a polyester polyol-based microcellular elastomer foam which comprises combining the following components

| Component | Parts by Wt (pphp) |
|---|---|
| Polyester polyol | 100 |
| Chain Extender | 4-15 |
| Water | 0-1.5 |
| Cell stabilizer | 0-1.5 |
| Tertiary amine catalyst | 0.1-0.8 |
| Property enhancing additive | 0.1-3 |
| Isocyanate prepolymer, free NCO % | 96-104 Index, 16-23% NCO |

## Claims

1. A composition consisting essentially of a fugitive tertiary amine urethane catalyst and an additive comprising one or more compounds of the following formulas A and/or B:
an amidoamine of formula A:

$$(RCO)N(R')\text{-}[(CH_2)_m\text{-}NR']_n\text{-}R' \qquad A$$

and
an imidazoline of formula B:

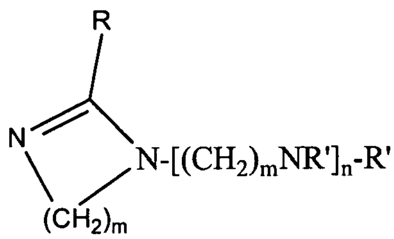

B

where
R is hydrogen, a C1-C35 alkyl, substituted alkyl, alkenyl, substituted alkenyl, aryl, substituted aryl or alkylaryl group;
R' each is independently an RCO- acyl group, a hydrogen, a C1-C36 alkyl, substituted alkyl, alkenyl, substituted alkenyl, aryl, substituted aryl or alkylaryl group; or when n > 1 in formula B a group the formula:

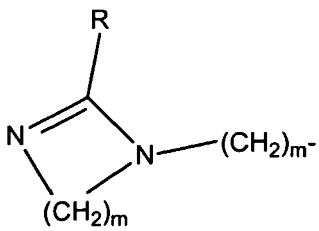

m is 2 or 3; and
n is an integer from 1 to 10.

2. The composition of claim 1 wherein the amidoamine and/or the imidazoline are the reaction product of a C1-C36 carboxylic acid and a polyethylene or polypropylene polyamine.

3. The composition of claim 2 further comprising a polyester or polyether polyol.

4. The composition of claim 1 wherein the catalyst is selected from the group consisting of fugitive gelling catalysts triethylenediamine, quinuclidine, pentamethyldipropylenetriamine, dimethylcyclohexylamine, tris(dimethylaminopropyl)amine, substituted imidazoles such as 1,2-dimethylimidazole, 1,8-diazabicyclo[5.4.0]undec-7-ene (DBU) and mixtures thereof.

5. The composition of claim 2 wherein the catalyst is selected from the group consisting of fugitive gelling catalysts triethylenediamine, quinuclidine, pentamethyldipropylenetriamine, dimethylcyclohexylamine, tris(dimethylaminopropyl)amine, substituted imidazoles such as 1,2-dimethylimidazole, 1,8-diazabicyclo[5.4.0]undec-7-ene (DBU) and mixtures thereof.

6. The composition of claim 2 wherein the catalyst is selected from the group consisting of fugitive blowing catalysts bis(dimethylaminoethyl) ether, pentamethyldiethylenetriamine and related compositions, higher permethylated polyamines such as permethylated triethylenetetramine, branched polyamines and mixtures thereof.

7. The composition of claim 1 wherein R is a C6-C17 alkyl or alkenyl group.

8. The composition of claim 3 wherein the carboxylic acid comprises coconut oil fatty acid, soya fatty acid, tall oil fatty acid or dimer acid.

9. The composition of claim 8 wherein the polyamine is diethylenetriamine (DETA), triethylenetetramine (TETA), tetraethylenepentamine (TEPA), or pentaethylenehexamine (PEHA).

10. The composition of claim 3 wherein the additive comprises the reaction product of tall oil fatty acids and tetraethylenepentamine (TEPA).

11. The composition of claim 3 wherein the additive comprises the reaction product of tall oil fatty acids and triethylenetetramine (TETA).

12. The composition of claim 1 comprising one or more blowing agents.

13. A composition comprising a fugitive tertiary amine urethane catalyst, a polyol component consisting of one or more polyols, and an additive comprising one or more compounds of the following formulas A1 and/or B1:
an amidoamine of formula A1:

$$(RCO)N(H)\text{-}[(CH_2)_m\text{-}NH]_n\text{-}R' \qquad A1$$

and
an imidazoline of formula B1:

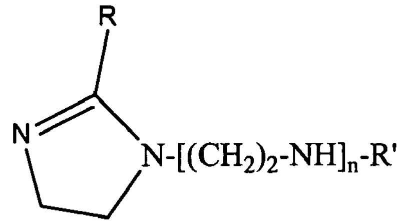

B1

in which
R is a C6-C17 alkyl, substituted alkyl, alkenyl, substituted alkenyl, aryl, substituted aryl or alkylaryl group;
R' is a hydrogen atom, a RCO- acyl group or an imidazole group of the formula:

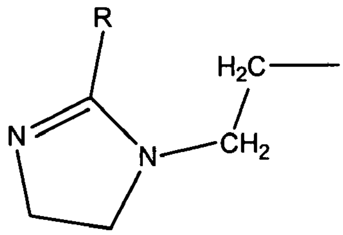

m is 2 or 3; and
n is an integer from 1 to 6 and when n = 1 then R' is hydrogen.

**14.** The composition of claim 13 wherein the fugitive tertiary amine urethane catalyst comprises one or more of triethylenediamine, quinuclidine, pentamethyldipropylenetriamine, dimethylcyclohexylamine, tris(dimethylaminopropyl) amine, substituted imidazoles such as 1,2-dimethylimidazole, 1,8-diazabicyclo[5.4.0]undec-7-ene (DBU) and mixtures thereof.

**15.** The composition of claim 13 wherein the amidoamine and/or the imidazoline are the reaction product of a C14-C22 carboxylic acid and a polyethylene or polypropylene polyamine.

European Patent Office

# EUROPEAN SEARCH REPORT

Application Number
EP 08 00 7579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 541 338 A (DEWHURST JOHN E [US] ET AL) 30 July 1996 (1996-07-30)<br>* column 1, lines 5-10,45,66 *<br>* column 3, lines 1-5 *<br>* column 6, lines 48-51 *<br>* example 25 *<br>----- | 1-10, 12-15 | INV.<br>C08G18/18<br>C08G18/20<br>C08G18/32<br>C08G18/38<br>C08G18/40<br>C08K5/3445<br><br>ADD.<br>C08G101/00 |
| X | EP 1 435 365 A (AIR PROD & CHEM [US]) 7 July 2004 (2004-07-07)<br>* paragraph [0002] *<br>* claims 1-19; examples 1-7 *<br>----- | 1,3-8, 12-14 | |
| P,A | EP 1 840 144 A (AIR PROD & CHEM [US]) 3 October 2007 (2007-10-03)<br>* the whole document *<br>----- | 1-15 | |

| TECHNICAL FIELDS SEARCHED (IPC) |
|---|
| C08G<br>C08K |

The present search report has been drawn up for all claims

2

| Place of search | Date of completion of the search | Examiner |
|---|---|---|
| The Hague | 20 August 2008 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 00 7579

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2008

| Patent document cited in search report | | Publication date | Patent family member(s) | | Publication date |
|---|---|---|---|---|---|
| US 5541338 | A | 30-07-1996 | NONE | | |
| EP 1435365 | A | 07-07-2004 | AT 364645 | T | 15-07-2007 |
| | | | DE 60314363 | T2 | 15-11-2007 |
| EP 1840144 | A | 03-10-2007 | BR PI0700851 | A | 27-11-2007 |
| | | | CN 101045800 | A | 03-10-2007 |
| | | | JP 2007262407 | A | 11-10-2007 |
| | | | KR 20070096966 | A | 02-10-2007 |
| | | | US 2007225393 | A1 | 27-09-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6258920 B
- US 5039713 A
- US 5559161 A
- US 4143003 A
- US 3836488 A
- US 5143944 A
- US 5233039 A
- US 5512603 A
- EP 499873 A
- US 4338408 A
- US 5508314 A
- US 5539007 A
- US 5874483 A
- US 5824711 A
- US 4582861 A


### Non-patent literature cited in the description


- *J. Cellular Plastics,* 1992, vol. 28, 360-398